# DEMANDE DE BREVET EUROPEEN

(11) **EP 0 549 425 A1**
(43) Date de publication de la demande: **30.06.1993**
(21) Numéro de dépôt: 92403450.7
(22) Date de dépôt: 17.12.1992
(51) Int. Cl.: H02K 1/27, H02K 1/17

(54) **Rotor et/ou stator doté de moyens de fixation des tuiles servant d'aimants permandents, et machine magnéto-dynamique, comme un moteur sans collecteur, ainsi équipée**

(30) Priorité: 20.12.1991 FR 9115923
(71) Demandeur: VALEO SYSTEMES D'ESSUYAGE, 78180 Montigny-Le-Bretonneux (FR)
(72) Inventeur: Garcia, José, F-78310 Maurepas (FR)
(74) Mandataire: Gamonal, Didier

(57) **Abrégé**

La présente invention concerne un rotor et/ou stator doté de moyens de fixation des tuiles servant d'aimants permanents. Elle concerne aussi une machine magnéto-dynamique comme un moteur sans collecteur, par exemple un moteur à commutation électronique.

La présente invention permet, par ajout d'un composant ou ajout de matière à titre d'attache, de fixer la tuile par une ailette ou par son corps (27) par l'intermédiaire d'un moyen d'attache (34).

## Description

La présente invention concerne un rotor doté de moyens de fixation des tuiles servant d'aimants permanents. Elle concerne aussi une machine magnéto- dynamique comme un moteur sans collecteur, par exemple un moteur à commutation électronique.

L'invention s'applique aussi au cas des moteurs à collecteur à courant continu, dont le stator est constitué par au moins une paire de pôles magnétiques, chacun d'eux étant constitué par une ferrite en forme de tuile.

Dans l'art antérieur, on a déjà proposé des moyens de fixation des ferrites sur un rotor. Cependant les dispositifs ne sont pas tous satisfaisants et l'invention se propose d'améliorer la simplicité et la fiabilité du montage.

En effet, l'invention concerne un rotor doté de moyens de fixation des tuiles servant d'aimants permanents, de façon à rendre cette fixation aussi sûre que possible.

En effet, selon un premier aspect, l'invention concerne un rotor et/ou un stator du type comportant un corps rotorique ou statorique, des aimants en forme de tuiles et des moyens de fixation d'une tuile au corps rotorique comprenant des perçages sur un corps rotorique ou statorique, perçages dans lesquels on introduit des moyens d'attache de la tuile au corps rotorique ou statorique. L'invention se caractérise en ce que la tuile présente au moins un bord longitudinal comportant au moins une ailette et en ce que le moyen d'attache est constitué par une agrafe destinée à recouvrir au moins une ailette.

Selon un second aspect, l'invention concerne un rotor et/ou un stator du type comportant un corps rotorique ou statorique, des aimants en forme de tuiles et des moyens de fixation d'une tuile au corps rotorique comprenant des perçages sur un corps rotorique ou statorique, perçages dans lesquels on introduit des moyens d'attache de la tuile au corps rotorique ou statorique. L'invention se caractérise en ce que la tuile présente au moins un bord longitudinal comportant au moins une ailette et en ce qu'au moins un bord longitudinal, comporte au moins une ailette dotée de perçages à travers chacun desquels on fait passer un moyen d'attache comme une patte d'agrafe ou une vis, dont l'extrémité filetée est vissée dans un trou fileté correspondant du corps rotorique ou statorique.

Selon un troisième aspect, l'invention concerne un rotor et/ou un stator du type comportant un corps rotorique ou statorique, des aimants en forme de tuiles et des moyens de fixation d'une tuile au corps rotorique comprenant des perçages sur un corps rotorique ou statorique, perçages dans lesquels on introduit des moyens d'attache de la tuile au corps rotorique ou statorique. L'invention se caractérise en ce que chaque tuile est dotée d'une série de perçages à travers chacun desquels on fait passer une patte d'agrafage dont l'extrémité libre entre à force dans le perçage correspondant du corps rotorique ou statorique.

Selon un quatrième aspect, l'invention concerne un rotor et/ou un stator du type comportant un corps rotorique ou statorique, des aimants en forme de tuiles et des moyens de fixation d'une tuile au corps rotorique comprenant des perçages sur un corps rotorique ou statorique, perçages dans lesquels on introduit des moyens d'attache de la tuile au corps rotorique ou statorique. L'invention se caractérise en ce qu'au moins une tuile est dotée d'au moins un perçage qui comporte un canal qui, d'un côté débouche dans une chambre, et de l'autre côté, débouche dans un perçage correspondant pratiqué dans le corps.

Enfin, l'invention concerne une machine magnéto- dynamique qui comporte un rotor et/ou un stator selon la définition précitée.

D'autres avantages et caractéristiques de la présente invention seront mieux compris à l'aide de la description et des dessins annexés qui sont :
- la figure 1 : une vue d'un premier mode de réalisation de l'invention,
- la figure 2 : un détail du mode de réalisation de la figure 1,
- la figure 3 : un autre mode de réalisation du moyen de fixation de l'invention,
- la figure 4 : un autre mode de réalisation du moyen de fixation de l'invention,
- la figure 5 : un détail d'une partie, vue en coupe, du moyen de la figure 4,
- la figure 6 : un moyen de fixation amélioré selon les modes de réalisation des figures 3 ou 4,
- la figure 7 : un autre mode de réalisation de l'invention.

Dans la suite de la description, on va illustrer le cas du rotor, notamment d'un moteur sans collecteur. L'invention s'applique aussi à d'autres machines comme les magnétos, les alternateurs. Mais la description s'applique par transposition à un stator à aimants permanents.

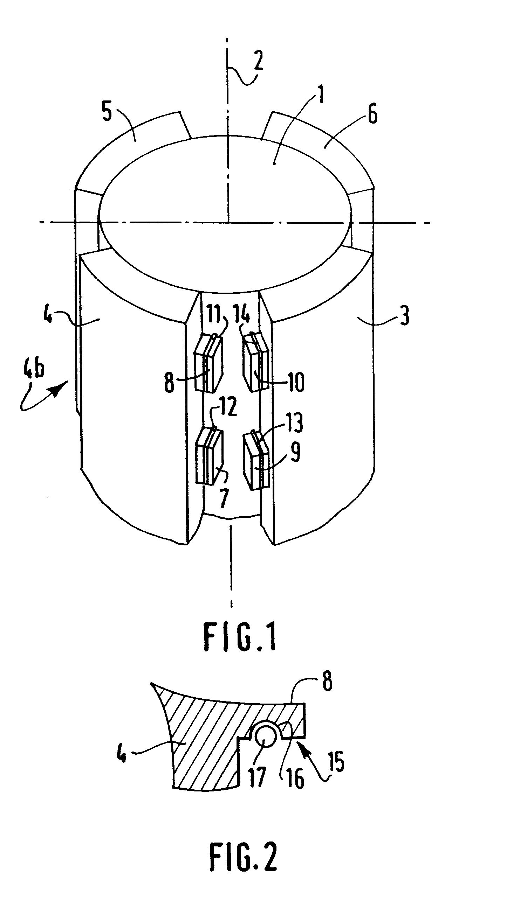

A la figure 1, on a représenté un moyen de fixation des tuiles servant d'aimants permanents sur un corps rotorique 1. La périphérie du corps rotorique qui tourne autour de l'axe 2, est munie de quatre tuiles respectivement 3, 4, 5, 6, dont chacune présente une face extérieure au dessin d'une polarité magnétique déterminée.

Selon l'invention, dans le mode de réalisation de la figure 1, chaque tuile est munie sur au moins un bord longitudinal d'au moins une ailette comme les ailettes 7 et 8 pour la tuile 4, et 9 et 10 pour la tuile 2. Les ailettes sont destinées à recevoir des agrafes comme les agrafes 11, 12, 13 et 14. Ces agrafes sont logées à force par percussion dans le corps rotorique.

De ce fait, les tuiles 3 - 6 sont fermement maintenues et de façon permanente sur le rotor 1.

A la figure 2, on a représenté une variante permettant d'améliorer l'agrafage représenté à la figure 1. A la figure 2, l'ailette 8 de la tuile 4 présente une face 15 extérieure par rapport au corps rotorique qui est doté d'une gorge 16 dans laquelle vient se loger la partie 17 d'une agrafe. De ce fait, quand on vient placer l'agrafe avec un outil d'agrafage, celle-ci ne peut plus glisser le long de l'ailette.

Dans un mode de réalisation, le corps rotorique de la figure 1 est constitué par un empilage de tôles magnétiques, par exemple obtenues par découpe des tôles du stator, et qui sont jointes ensemble par exemple par serrage de la pile des tôles à l'aide de goujons (non représentés). De ce fait, il est possible de venir coincer à force les extrémités libres des agrafes entre deux tôles.

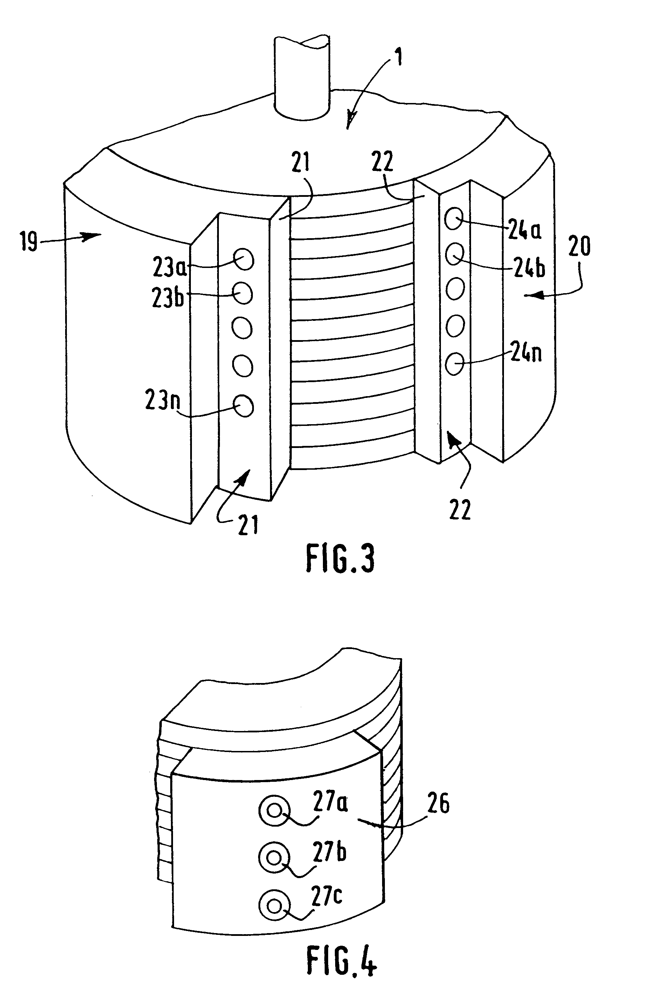

A la figure 3, on a représenté un autre mode de réalisation d'un moyen de fixation des tuiles selon l'invention.

A la figure 3, qui est une vue partielle d'un corps rotorique, deux tuiles 19 et 20 sont partiellement représentées munies d'ailettes respectivement 21 et 22. Ces ailettes sont, dans un mode de réalisation particulier, développées sur toute la longueur des bords latéraux de la tuile 19 ou 20.

Chaque ailette 21,22 est munie de perçages cylindriques respectivement 23a, 23b, ... ,23n et 24a, 24b, ..., 24n. Ces séries de n perçages sont destinées à recevoir des vis qui entrent aussi dans un trou correspondant du corps rotorique 1. Si les perçages sont en nombres pairs, ils peuvent recevoir des agrafes comme dans le cas de la figure 2.

A la figure 4, on a représenté un autre mode de fixation par vis, dans lequel la tuile 26 est percée d'au moins un trou 27a, 27b, 27c de passage de vis. Dans un mode préféré de réalisation, la tuile 26 est munie de trous de passage en nombre de trois alignés le long d'une génératrice du rotor. Les trous peuvent être fraisés pour permettre de loger à effleurement des vis. Les vis sont filetées seulement sur leur partie d'extrémité destinée à être vissée dans un trou fileté correspondant pratiqué initialement dans le corps rotorique.

Dans un autre mode de réalisation, non représente, la tuile est munie de trois perçages qui sont répartis sur les sommets d'un triangle.

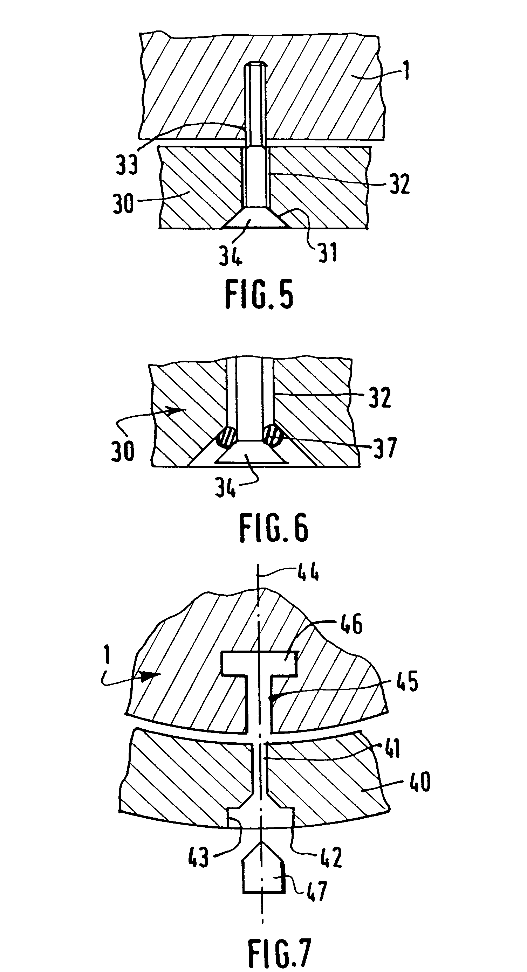

A la figure 5, on a représenté un détail de la fixation par vis, que cette fixation soit utilisée pour les ailettes de la figure 3 ou pour les tuiles de la figure 4.

La ferrite ou tuile 30 est munie d'un perçage conique 31 et d'un perçage cylindrique 32. Le perçage cylindrique correspond au perçage fileté 33 dans l'épaisseur du corps rotorique. On introduit ensuite une vis à tête fraisée 34, dont seule la partie destinée à pénétrer dans le trou fileté 33 reçoit un filetage correspondant.

Il est souvent souhaitable de cummuler ce type de fixation par attache, avec un collage. Dans une telle circonstance, le point de colle peut être placé en utilisant par exemple la ferrite elle-même et en y introduisant, par le canal constitué par le perçage lisse 32, une certaine quantité de colle sous pression. Puis l'on introduit la vis 34 que l'on visse dans le trou fileté 33.. Par application d'une pression, la colle a tendance à se répartir dans les deux perçages 32 et 33 ainsi que dans l'interface entre la tuile 30 et le corps rotorique 1. De ce fait, la vis et la tuile sont immobilisées par rapport au corps rotorique.

A la figure 6, on a représenté un autre mode de réalisation d'un moyen de fixation selon l'invention, moyen dans lequel la vis 34 pénètre dans le logement 32 de la tuile 30 par l'intermédiaire d'une rondelle 37. Dans un mode de réalisation cette rondelle est constituée par un corps déformable.

Dans un autre mode de réalisation, la rondelle est réalisée sous forme d'un anneau en matériau élastique de section circulaire. Quand la vis 34 est serrée, la tête de la vis écrase l'anneau élastique 37. De ce fait, l'anneau 37 exerce toujours un effort de réaction contre la tête de la vis, ce qui évite que, sous l'effet des vibrations ou d'autres phénomènes mécaniques du fonctionnement du moteur, la vis se détache.

A la figure 7, on a représenté un autre mode de réalisation d'un moyen de fixation selon l'invention.

La tuile 40 est dotée d'un perçage 41 d'un premier diamètre ainsi que d'une chambre 42. La chambre 42 comporte une partie 43 plus large que le diamètre du perçage 41. Le perçage 41 présente un axe central 44 qui est, lorsque la tuile 40 est installée sur le rotor 1, aligné avec l'axe central d'un perçage 45. L'extrémité intérieure du perçage 45 à l'intérieur du corps 1 présente une chambre 46 d'expansion.

Les chambres respectivement 42 et 46 peuvent présenter toutes les géométries liées avec la nature du moyen de remplissage qui va être décrit ci-après. Une fois les logements 41 et 45 mis en correspondance, cette opération pouvant être, mais non nécessairement, réalisée à l'aide de tiges de gabarit. Une buse d'injection 47 est approchée de l'orifice du logement 42 et une matière durcissable est injectée sous pression de façon à remplir complètement la chambre d'expansion 46.

Dans un premier mode de réalisation, le matériau injecté en fusion se solidifie à l'air. Dans un autre mode de réalisation, le matériau en fusion injecté sous pression se solidifie lors de son refroidissement. Comme exemples de matériaux, on peut utiliser une résine époxy, une résine phénolique, ou un matériau composite. On peut aussi utiliser un matériau métallique dont le point de ramollissement est compatible avec la tenue en température du rotor. Le matériau peut être injecté à chaud et se solidifier une fois en place. Lors du fonctionnement du moteur, il doit conserver ses propriétés mécaniques.

Une fois la matière solidifiée, la tuile 40 est fixée définitivement au rotor 1.

Dans d'autres modes de réalisation, la tuile est fixée sur la paroi intérieure d'une culasse, comme par exemple un rotor cloche ou le stator extérieur d'un moteur à collecteur à courant continu. L'ensemble des éléments caractéristiques de l'invention se transpose dans ce cas.

De même il est possible de combiner pour une même tuile plusieurs des moyens de fixation précités.

C'est en effet le cas quand on souhaite produire des ferrites sous forme standard en laissant le choix selon le type de moteur et le type d'application du mode de fixation.

En particulier, l'ailette continue du mode de réalisation de la figure 3 peut être remplacée par une succession d'ailettes discrètes comme dans le cas de la figure 1, un logement d'agrafes étant ajouté de plus ainsi qu'au moins un perçage cylindrique.

Dans le mode de réalisation de la figure 7, notamment dans le cas où la culasse ou rotor est constituée d'un empilement de tôles magnétiques, le perçage 45 et la chambre 46 peuvent être constitués par des découpes venant par emboutissage dans chaque tôle qui correspond au perçage 45,46 qui est prévu. Les tôles sont assemblées ensuite dans l'ordre de façon à reconstituer une culasse ou corps rotorique présentant une succession de perçages 45 débouchant, tel que représenté en coupe à la figure 7.

## Revendications

**1)** Rotor et/ou stator du type comportant un corps rotorique ou statorique (1), des aimants en forme de tuiles (3-6) et des moyens de fixation d'une tuile au corps rotorique comprenant des perçages sur un corps rotorique ou statorique, perçages dans lesquels on introduit des moyens d'attache de la tuile au corps rotorique ou statorique, caractérisé en ce que la tuile présente au moins un bord longitudinal comportant au moins une ailette (7-10) et en ce que le moyen d'attache est constitué par une agrafe destinée à recouvrir au moins une ailette (7-10).

**2)** Rotor et/ou stator selon la revendication 1, caractérisé en ce que l'ailette (8) est dotée d'un logement (16) destiné à maintenir le corps de l'agrafe (17).

**3)** Rotor et/ou stator du type comportant un corps rotorique ou statorique (1), des aimants en forme de tuiles (3-6) et des moyens de fixation d'une tuile au corps rotorique comprenant des perçages sur un corps rotorique ou statorique, perçages dans lesquels on introduit des moyens d'attache de la tuile au corps rotorique ou statorique, caractérisé en ce que la tuile présente au moins un bord longitudinal comportant au moins une ailette (7-10) et en ce qu'au moins un bord longitudinal, comporte au moins une ailette (8 ; 21) dotée de perçages (27 ; 23a,23b, ..., 23n) à travers chacun desquels on fait passer un moyen d'attache comme une patte d'agrafe ou une vis, dont l'extrémité filetée est vissée dans un trou fileté correspondant du corps rotorique ou statorique.

**4)** Rotor et/ou stator selon la revendication 3, caractérisé en ce que la vis est filetée sur la seule partie d'extrémité destinée à rentrer dans un trou fileté pratiqué sur le corps (1).

**5)** Rotor et/ou stator selon la revendication 4, caractérisé en ce que la vis est fraisée et que le trou (27a, 27b, 27c) de passage présente un fraisage correspondant (31).

**6)** Rotor et/ou stator selon la revendication précédente, caractérisé en ce que la tête de vis coopère avec un anneau élastique de compression (37).

**7)** Rotor et/ou stator du type comportant un corps rotorique ou statorique (1), des aimants en forme de tuiles (3-6) et des moyens de fixation d'une tuile au corps rotorique comprenant des perçages sur un corps rotorique ou statorique, perçages dans lesquels on introduit des moyens d'attache de la tuile au corps rotorique ou statorique, caractérisé en ce que chaque , tuile est dotée d'une série de perçages (27) à travers chacun desquels on fait passer une patte d'agrafage dont l'extrémité libre entre à force dans le perçage correspondant du corps rotorique ou statorique.

**8)** Rotor et/ou stator du type comportant un corps rotorique ou statorique (1), des aimants en forme de tuiles (3-6) et des moyens de fixation d'une tuile au corps rotorique comprenant des perçages sur un corps rotorique ou statorique, perçages dans lesquels on introduit des moyens d'attache de la tuile au corps rotorique ou statorique, caractérisé en ce qu'au moins une tuile (40) est dotée d'au moins un perçage qui comporte un canal (41) qui, d'un côté débouche dans une chambre (42), et de l'autre côté, débouche dans un perçage correspondant (45) pratiqué dans le corps (1).

**9)** Rotor et/ou stator selon la revendication 8, caractérisé en ce que le canal (45) pratiqué dans le corps rotorique ou statorique (1) se termine par une chambre d'expansion (46).

**10)** Rotor et/ou stator selon la revendication précédente, caractérisé en ce que le moyen d'attache est constitué par le remplissage du canal (45) et du logement (41) par une matière en fusion destinée à se solidifier, comme un matériau plastique, une résine époxy, une résine phénolique, un matériau composite ou un matériau métallique dont la tenue mécanique à chaud est compatible avec la température de fonctionnement de la machine magnéto-dynamique dans laquelle le rotor et/ou stator est installé.

**11)** Rotor et/ou stator selon l'une des revendications 8 à 10, caractérisé en ce que le canal (45) et la chambre d'expansion (46) sont réalisés par emboutissage puis empilage de tôles de culasse.

**12)** Machine magnéto-dynamique, caractérisée en ce qu'elle comporte un rotor et/ou stator selon l'une des revendications précédentes.
